Europäisches Patentamt

European Patent Office

Office européen des brevets

(19)

(11) Veröffentlichungsnummer: **0 149 129**

**A2**

(12)

# EUROPÄISCHE PATENTANMELDUNG

(21) Anmeldenummer: **84115101.2**

(22) Anmeldetag: **10.12.84**

(51) Int. Cl.⁴: **A 01 D 75/30**
**B 60 K 25/00**

(30) Priorität: **13.12.83 DE 3344987**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Ing. Alfred Schmidt GmbH**

**D-7822 St. Blasien(DE)**

(71) Anmelder: **Flughafen Frankfurt/Main AG**

**D-6000 Frankfurt (Main) 75(DE)**

(72) Erfinder: **Doyen, Hans-Henning**
**Erlenbergstrasse 8**
**D-6730 Neustadt-Königsbach(DE)**

(72) Erfinder: **Hühn, Edgar**
**Zille Ring 49**
**D-6082 Mörfelde-Walldorf(DE)**

(74) Vertreter: **Grättinger, Günter**
**Wittelsbacher Strasse 5 Postfach 16 49**
**D-8130 Starnberg(DE)**

(54) Antriebssystem an einem Trägerfahrzeug für verschiedene Front-bzw. Heckanbaugeräte.

(57) Bei einem Antriebssystem an einem Trägerfahrzeug für verschiedene Front-bzw. Heckanbaugeräte zur Landschaftsplfege im Sommer- und Wintereinsatz, besitzt das Trägerfahrzeug 1 für den Antrieb leistungsstarker Geräteeinheiten neben dem Fahrzeugmotor noch einen Aufbaumotor 2, der mit einer Unterflurgelenkwelle 10 für den Antrieb einer frontseitig angebauten Schneeräummaschine versehen ist. Der Fahrzeugmotor weist wenigstens eine frontseitige Zapfwelle 5 auf, die im Sommereinsatz für den Betrieb einer Front-Mäheinheit 23 vorgesehen ist. Der Aufbaumotor 2 weist noch eine heckseitige Gelenkwelle 6 für den Betrieb einer heckseitig angebauten aus mehreren getrennten Mäheinheiten zusammengesetzten Mäheinrichtung 11 mit großer Mähbreite auf.

Fig.2

EP 0 149 129 A2

Croydon Printing Company Ltd

- ) -

## Antriebssystem an einem Trägerfahrzeug für verschiedene Front- bzw. Heckanbaugeräte

Die Erfindung betrifft ein Antriebssystem an einem Trägerfahrzeug für verschiedene Front- bzw. Heckanbaugeräte zur Landschaftspflege im Sommer- und Wintereinsatz, wobei für den Antrieb leistungsstarker Geräteeinheiten das Trägerfahrzeug neben dem Fahrzeugmotor noch mit einem Aufbaumotor ausgerüstet ist, der mit einer Front-Antriebsverbindung für den Antrieb einer frontseitig angebauten Schneeräummaschine versehen ist.

Derartige Antriebssysteme sind bekannt. Sie werden jedoch hauptsächlich im Wintereinsatz verwendet, da für den Betrieb von Anbaugeräten, die im Sommer zum Einsatz kommen, ein Aufbaumotor nicht notwendig ist. Im Sommereinsatz wurde daher der Aufbaumotor des Trägerfahrzeugs vielfach durch eine Ladepritsche ersetzt.

Aufgrund der Erkenntnis, daß beim Mähen der großen Grasflächen auf Flughäfen das Erzielen einer großen Flächenleistung von besonderer wirtschaftlicher Bedeutung ist, ergibt sich als der vorliegenden Erfindung zugrundeliegende Aufgabenstellung die Schaffung eines Antriebssystems, welches insbesondere für den Antrieb von Hochleistungsgeräten für den Mähbetrieb im Sommer einerseits und für den Schneeräumbetrieb im Winter andererseits geeignet ist. Um eine Mähleistung von etwa 7 ha pro Stunde zu erzielen, setzte man bislang auf Flughäfen zwei vorausfahrende Spindelmäher mit einer Schnittbreite von jeweils etwa 4 m ein, auf deren Spur ein Sichelmähgerät mit etwa doppelter Schnittbreite nachfuhr.

Es sind ferner Großflächenmäher bekannt, welche ein Seitenmähwerk im Frontanbau und ein am Heck eines Trägerfahrzeugs nachgeschlepptes Mähwerk umfassen.

Ein zur Lösung der genannten Aufgabe geeignetes Antriebssystem, welches im Mähbetrieb den bekannten Geräten an Schnittbreite und Fahrgeschwindigkeit überlegen ist, besteht darin, daß für den Sommereinsatz des Trägerfahrzeugs zum Betrieb einer Front-Mäheinheit als Antrieb entweder der Fahrzeugmotor oder der Aufbaumotor über die Front-Antriebsverbindung vorgesehen ist und daß der Aufbaumotor noch mit einer Heck-Antriebsverbindung für den Betrieb einer heckseitig angebauten, aus mehreren getrennten Mäheinheiten zusammengesetzten Mäheinrichtung mit großer Mähbreite versehen ist. Dabei kann der Fahrzeugmotor eine frontseitige Zapfwelle aufweisen und die Heck-Antriebsverbindung kann durch eine Gelenkwelle gebildet sein. Als Front-Antriebsverbindung kann eine mit dem Aufbaumotor verbundene Unterflur-Gelenkwelle vorgesehen sein.

-3-

Nach diesem Vorschlag ist es bei entsprechender Dimensionierung des Aufbaumotors möglich, bei einer Arbeitsbreite von ca. 9 m und einer Fahrgeschwindigkeit von 8 bis 10 km/h eine Flächenleistung von 8 bis 10 ha pro Stunde zu erzielen. Die Antriebsleistung von Aufbaumotor und Fahrmotor zusammen beträgt dabei etwa 400 kW. Der besondere Vorteil dieses Antriebssystems besteht darin, daß der Aufbaumotor im Winterdienst für den Antrieb von Hochleistungsschneeräummaschinen ohnehin erforderlich ist. Dies gilt ganz besonders für die Pflege von Flugplätzen, wo meist mehrere derartiger Schneeräummaschinen vorhanden sind. Nach der Lehre der vorliegenden Erfindung läßt sich das für den Betrieb der Schneefräsen ohnehin erforderliche Antriebssystem, nämlich das Trägerfahrzeug mit Aufbaumotor nunmehr auch im Sommerbetrieb zum Großflächenmähen einsetzen. Neben der Unterflurgelenkwelle bedarf es dabei zusätzlich lediglich einer frontseitigen Zapfwelle für den Fahrzeugmotor und einer heckseitigen Gelenkwelle für den Aufbaumotor. Damit können die erforderlichen Mäheinheiten , welche front- und heckseitig am Trägerfahrzeug angebaut sind, betrieben werden.

Es hat sich gezeigt, daß der Leistungsbedarf für die frontseitige Mäheinheit lediglich 1/7 bis 1/5 des

-4-

Leistungsbedarfs für eine heckseitige Mäheinrichtung erfordert, wenn letztere wenigstens zwei Paare seitlich gestaffelt angeordneter Mäheinheiten umfaßt.

Somit ist für das erfindungsgemäße Antriebssystem, welches ein Trägerfahrzeug mit Aufbaumotor umfaßt, eine ganzjährige Auslastung erreichbar, wobei im Sommereinsatz je nach Höhe der Grasnarbe und Witterungsverlauf mit zwei bis fünf Grasschnitten zu rechnen ist.

Wegen seines großen Leistungsangebots eignet sich das erfindungsgemäße Antriebssystem besonders für den Betrieb leistungsstarker Schlegelmulchgeräte, die es ermöglichen, die Grasnarbe auf jede beliebige Höhe zu schneiden, und welche das Schnittgut so stark zerkleinern daß es gleichmäßig, d.h. ohne Schwadenbildung über die Grasfläche verteilt wird. Die Arbeitsbreiten derartiger Schlegelmulchgeräte betragen etwa 1,75 m bis 2,50 m. Ihre Arbeitsdrehzahl beträgt über 2000 Umdrehungen pro Minute.

Antrieb und Aufbau der heckseitigen Mäheinrichtung können auf verschiedene Weise verwirklicht sein, z.B. können die heckseitigen Mäheinheiten über ein gemeinsames Verteilergetriebe, etwaa in Art eines Zahnradgetriebes angetrieben werden. Eine zweckmäßige Ausführungsform sieht vor, daß die Mäh- einrichtung ausschließlich über die heckseitige Ge-

-5-

lenkwelle des Aufbaumotors angetrieben wird, welche mit einem Verteilergetrieb verbunden ist, von dem aus ein erstes Paar heckseitiger Mäheinheiten über eine Riementriebverbindung und ein zweites Paar über seitliche Gelenkwellen angetrieben wird.

Eine weitere Variante besteht darin, daß ein erstes Paar heckseitiger Mäheinheiten über die heckseitige Gelenkwelle des Aufbaumotors , ein zweites Paar über durch den Aufbaumotor betriebene Hydraulikkreise angetrieben wird.

Eine besonders vorteilhafte Ausführungsform der Erfindung sieht vor, daß das erste Paar der heckseitigen Mäheinheiten in Mährichtung gesehen vor und wenigstens teilweise innerhalb des zweiten Paares angeordnet ist, wobei alle heckseitigen Mäheinheiten an einem gemeinsamen Geräterahmen aufgehängt sind, der höhenverstellbar auf Rädern abgestützt ist und vom Trägerfahrzeug geschleppt wird. Geeignete Trägerfahrzeuge besitzen Fahrzeugmotore mit einer Leistung von etwa 130 KW. Zum Betrieb eines frontseitig angebauten Schlegelmulchgeräts gibt der Fahrzeugmotor über die frontseitige Zapfwelle eine Leistung von ca. 70 KW ab. Im Rahmen der Erfindung kann jede der heck- bzw. frontseitigen Antriebsverbindungen auch als hydraulischer Antrieb ausgebildet sein.

Im folgenden wird das erfindungsgemäße Antriebssystem anhand der Zeichnung erläutert. Es zeigt

Fig. 1    ein Trägerfahrzeug in der Seitenansicht,

Fig. 2    eine Draufsicht auf das Trägerfahrzeug mit Front-Mäheinheit und heckseitiger Mäheinrichtung,

Fig. 3    eine Seitenansicht der heckseitigen Mäheinrichtung gem. Fig. 2 und

Fig. 4    eine Variante der heckseitigen Mäheinrichtung in schematischer Darstellung.

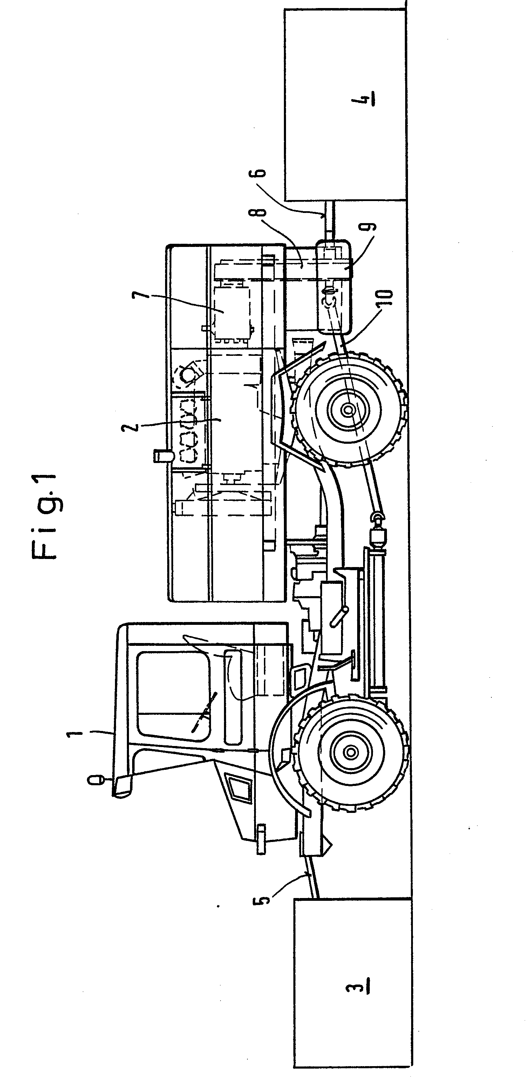

Fig. 1 zeigt ein Trägerfahrzeug 1 mit Aufbaumotor 2. Vorne am Fahrzeug ist ein Anbauraum 3 für eine Front-Mäheinheit, hinter dem Fahrzeug ein Anbauraum 4 für eine heckseitige Mäheinrichtung schematisch aufgezeichnet. Die Front-Mäheinheit wird über eine frontseitige Zapfwelle 5 des Fahrzeugmotors angetrieben; die heckseitige Mäheinrichtung wird über eine heckseitige Gelenkwelle 6 des Aufbaumotors 2 angetrieben. Ein mit dem Aufbaumotor 2 verbundener oberer Getriebeblock 7 ist über eine Keilriemenverbindung 8 mit einem unterflur angeordneten Getriebeblock 9 verbunden. Dieser steht in Abtriebsverbindung einerseits mit der heckseitigen Gelenkwelle 6, andererseits mit der Unterflurgelenkwelle 10, welche frontseitig, etwa im Bereich zwischen den Vorderrädern endet. Das freie

-7-

Ende dient für den Antrieb einer frontseitig angebauten Schneeräummaschine , wobei in diesem Fall die heckseitige Gelenkwelle 6 unbelastet ist, während im Sommerbetrieb die Unterflurgelenkwelle 10 nicht benötigt wird und daher demontiert werden kann.

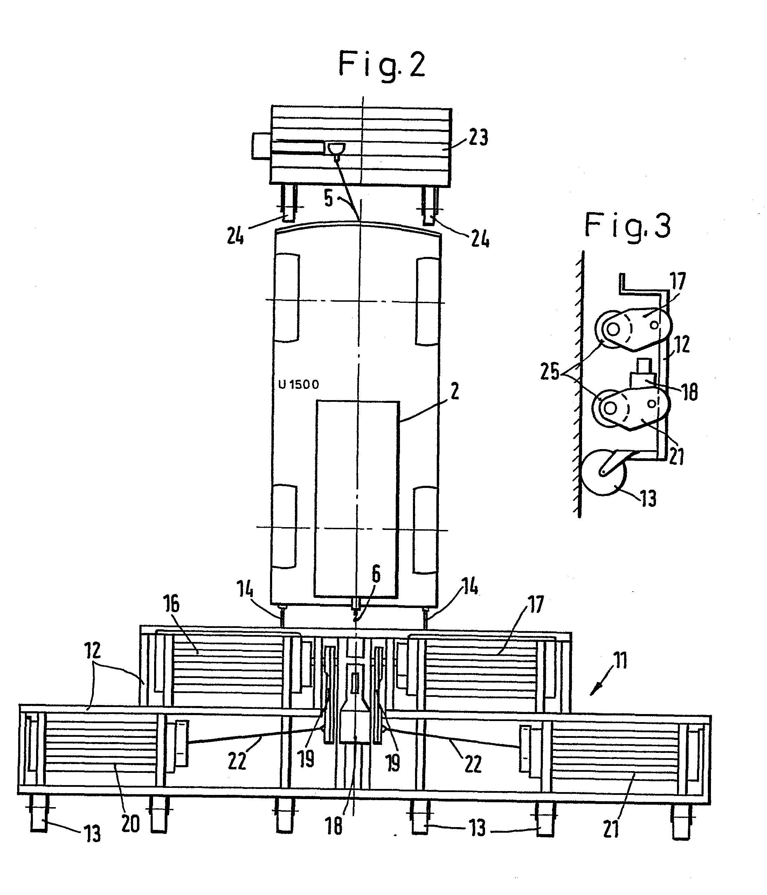

Gem. Fig. 2 besteht die heckseitige Mäheinrichtung 11 aus zwei Paaren seitlich hintereinander gestaffelter Mäheinheiten, wobei alle Mäheinheiten an einem gemeinsamen Rahmen 12, der auf Rädern 13 am Fahrzeugheck nachgeschleppt wird, wobei der Rahmen über zwei seitliche Anhängekupplungen 14 mit dem Fahrzeugheck verbunden ist. Ein erstes Paar direkt hinter dem Fahrzeugheck angeordneter Mäheinheiten 16, 17 wird über ein Verteilergetriebe 18 von jeweils einer Riementriebverbindung 19 angetrieben. Ein zweites Paar äußerer Mäheinheiten 20, 21 wird über das Verteilergetriebe 18 und seitliche Gelenkwellen 22 angetrieben. Alle Mäheinheiten sind am Rahmen befestigt, Dessen Räder 13 sind höhenverstellbar, damit die gewünschte Schnitthöhe eingestellt werden kann. Das Verteilergetriebe 18 selbst ist über die heckseitige Gelenkwelle 6 mit dem Aufbaumotor verbunden.

Die Front-Mäheinheit 23 wird über die frontseitige Zapfwelle 5 vom Fahrzeugmotor angetrieben. Sie ist höhenverstellbar am Fahrzeug befestigt (nicht näher dargestellt) und auf zwei Nachlaufrädern 24 gegenüber dem Boden abgestützt.

-8-

Fig. 3 zeigt in der Seitenansicht die heckseitige Mäheinrichtung 11 mit dem Rahmen 12, an welchem die entsprechenden Mäheinheiten 17, 21 befestigt sind. Zwischen den Mäheinheiten ist das Verteilergetriebe 18 erkennbar. An der Unterseite der Mäheinheiten erkennt man jeweils das Gehäuse 25 der Schlegelmulchgeräte.

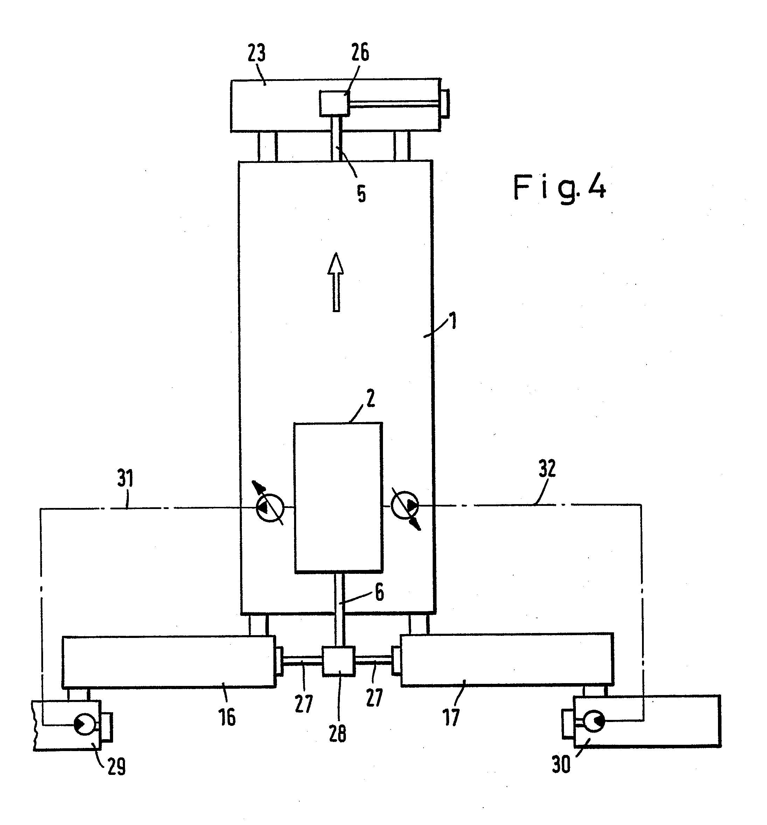

Fig. 4 zeigt in schematischer Draufsicht eine Variante des Antriebssystems. Am Trägerfahrzeug 1 mit Aufbaumotor 2 ist die Front-Mäheinheit 23 aufgehängt, deren Schnittbreite etwas größer ist als die Breite des Trägerfahrzeugs 1. Die Front-Mäheinheit 23 wird über die frontseitige Zapfwelle 5 und ein Umlenkgetriebe 26 angetrieben. Heckseitig sind an dem Trägerfahrzeug 1 zwei Paare von weiteren Mäheinheiten befestigt und in seitlicher Richtung zueinander gestaffelt angeordnet. Ein erstes Paar mit zwei direkt am Fahrzeugheck befestigten Mäheinheiten 16,17 ist über die heckseitige Gelenkwelle 6 des Aufbaumotors 2 und Antriebswellen 27 eines gemeinsamen Getriebes 28 angetrieben. Diese beiden Mäheinheiten 16,17 entsprechen in ihrer Schnittbreite etwa der Front-Mäheinheit 23. Das äußere Paar der heckseitigen Mäheinheit 29,30 besitzt eine etwas kleinere Mähbreite als die vorauslaufenden Mäheinheiten 16,17 an deren Gehäuse die äußeren Mäheinheiten 29, 30 aufgehängt sind. Als Aufhängung kommt

-9-

sowohl eine starre als auch eine gelenkige Verbindung in Art eines auf Rädern laufenden Schleppgerätes in Frage. Die beiden äußeren heckseitigen Mäheinheiten 29,30 werden über Hydraulikkreise 31,32 des Aufbaumotors 2 angetrieben.

Für die Leistungsverteilung gem. dem in Fig. 4 dargestellten Ausführungsbeispiel kann angenommen werden, daß das Trägerfahrzeug selbst mit etwa 125 KW, der Aufbaumotor mit etwa 330 KW ausgelegt ist. Auf der frontseitigen Zapfwelle des Trägerfahrzeugs 1 stehen für den Antrieb der Front-Mäheinheit ca. 65 KW zur Verfügung. Der Leistungsbedarf der heckseitigen Mäheinheiten kann ohneweiteres durch den Aufbaumotor 2 gedeckt werden, wobei dieser einen Teil seiner Leistung über die heckseitige Gelenkwelle 6, einen anderen Teil über die Hydraulikkreise 31,32 abgibt.

Hinsichtlich der Schnittbreiten kann bei diesem Beispiel davon ausgegangen werden, daß die drei größeren Mäheinheiten 16,17, 23 jeweils eine Schnittbreite von 2,50 m , die kleineren heckseitigen Mäheinheiten 29,30 jeweils eine Schnittbreite von 1,75 m haben. Die Schnittbreite des Gesamtsystems beträgt daher knapp 9 m.

Patentansprüche

1. Antriebssystem an einem Trägerfahrzeug für verschiedene Front- bzw. Heckanbaugeräte zur Landschaftspflege im Sommer- und Wintereinsatz, wobei für den Antrieb leistungsstarker Geräteeinheiten das Trägerfahrzeug (1) neben dem Fahrzeugmotor noch mit einem Aufbaumotor (2) ausgerüstet ist, der mit einer Front-Antriebsverbindung für den Antrieb einer frontseitig angebauten Schneeräummaschine versehen ist, dadurch gekennzeichnet, daß für den Sommereinsatz des Trägerfahrzeugs zum Betrieb einer Front-Mäheinheit (23) als Antrieb entweder der Fahrzeugmotor oder der Aufbaumotor (2) über die Front-Antriebsverbindung vorgesehen ist und daß der Aufbaumotor (2) noch mit einer Heck- -Antriebsverbindung für den Betrieb einer heckseitig angebauten aus mehreren getrennten Mäheinheiten zusammengesetzten Mäheinrichtung (11) mit großer Mähbreite versehen ist.

2. Antriebssystem nach Anspruch 1, dadurch gekennzeichnet, daß der Fahrzeugmotor eine frontseitige Zapfwelle (5) aufweist.

3. Antriebssystem nach Anspruch 1, dadurch gekennzeichnet, daß die Heck-Antriebsverbindung durch eine Gelenkwelle (6) gebildet ist.

4. Antriebssystem nach Anspruch 1,
dadurch gekennzeichnet,
daß die heckseitige Mäheinrichtung (11) wenigstens
zwei Paare heckseitiger Mäheinheiten, die zur Seite
hin gestaffelt angeordnet sind, umfaßt.

5. Antriebssystem nach einem der Ansprüche 1 bis 4,
dadurch gekennzeichnet,
daß die heckseitigen Mäheinheiten über ein gemeinsames Verteilergetriebe angetrieben werden.

6. Antriebssystem nach einem der Ansprüche 1 bis 5,
dadurch gekennzeichnet,
daß die heckseitige Mäheinrichtung (11) ausschließlich über die heckseitige Gelenkwelle (6) des Aufbaumotors (2) angetrieben wird, welche mit den Verteilergetrieb (18) verbunden ist, von dem aus ein
erstes Paar heckseitiger Mäheinheiten (16,17) über
eine Riementriebverbindung (9,10) und ein zweites Paar (20,21) über seitliche Gelenkwellen (22)
angetrieben wird.

7. Antriebssystem nach Anspruch 1 bis 5,
dadurch gekennzeichnet,
daß ein erstes Paar heckseitiger Mäheinheiten (16,
17) über die heckseitige Gelenkwelle (6) des Aufbaumotors (2), ein zweites Paar (29,30) über durch
den Aufbaumotor (2) betriebene Hydraulikkreise (31,-
32) angetrieben wird.

-3-

8. Antriebssystem nach Anspruch 6 oder 7,
   dadurch gekennzeichnet,
   daß das erste Paar der heckseitigen Mäheinheiten
   (16,17) , in Mährichtung gesehen, vor und wenigstens
   teilweise innerhalb des zweiten Paares (20,21; 29,
   30) angeordnet ist, wobei alle heckseitigen Mäheinheiten an einem gemeinsamen Geräterahmen (12)
   aufgehängt sind, der höhenverstellbar auf Rädern
   (13) abgestützt ist und vom Trägerfahrzeug (1) geschleppt wird.

9. Antriebssystem nach Anspruch 1,
   dadurch gekennzeichnet,
   daß die Antriebsleistung des Aufbaumotors (2) wenigstens das doppelte der Fahrzeugmotorleistung
   beträgt .

Fig.1

# Fig. 2

U 1500

# Fig. 3

Fig.4